# EUROPÄISCHE PATENTSCHRIFT

(11) **EP 0 639 878 B1**
(45) Veröffentlichungstag und Bekanntmachung des Hinweises auf die Patenterteilung: **24.09.1997**
(21) Anmeldenummer: 94112806.8
(22) Anmeldetag: 17.08.1994
(51) Int. Cl.: H02G 3/08

(54) **Kabeldose**
Cable housing
Boîtier pour câble

(30) Priorität: 20.08.1993 DE 9312476 U
(43) Veröffentlichungstag der Anmeldung: 22.02.1995
(73) Patentinhaber: WISKA HOPPMANN & MULSOW GMBH & CO., D-24568 Kaltenkirchen (DE)
(72) Erfinder: Jenss,Raimund, D-23869 Elmenhorst (DE)
(74) Vertreter: DIEHL GLAESER HILTL & PARTNER

(56) Entgegenhaltungen:
- EP-A- 0 546 637
- CH-A- 434 411

## Beschreibung

Die Erfindung bezieht sich auf eine Kabeldose mit Deckel und Dichtung, im wesentlichen bestehend aus einer quaderförmigen Dose aus Hartkunststoff, einem auf dieser aufsetzbaren und an dieser befestigten Deckel und einer zwischen Deckel und Mündungsrand der Dose angeordneten Dichtung, wobei die Dose in ihren Seitenwandungen mit einer Mehrzahl von Gewindeöffnungen zur Aufnahme von Kabelverschraubungen ausgebildet ist, die zum Doseninneren hin jeweils mit einer über eine ringförmige Sollbruchstelle verbundenen Ausbrechscheibe abgeschlossen ist.

Derartige Kabeldosen sind bekannt und haben sich bestens bewährt, wenn besonders hohe Anforderungen an die Dichtigkeit der Einführung des Kabels in die Kabeldose zu erfüllen sind. In diesem Falle wird nämlich der Kabelmantel dicht mit einer Kabelverschraubung verbunden, wobei die Kabelverschraubung in das entsprechende Gewinde in der Seitenwandung der Dose eingeschraubt wird. Wird dieser Schraubvorgang genügend weit durchgeführt, so bricht die Ausbrechscheibe im Bereich der ringförmigen Sollbruchstelle durch und gibt den Weg für das einzuführende Kabel frei. Die Kabelverschraubung kann hinreichend fest mit den geeigneten Werkzeugen angezogen werden (Vgl. EP-A-0 546 637).

Es ist auch eine Kabeldose mit Deckel und Dichtung, bestehend aus einer quaderförmigen Dose aus Hartkunststoff, einem auf dieser aufsetzbaren und an dieser befestigten Deckel und einer zwischen Deckel und Mündungsrand der Dose angeordneten Dichtung, wobei die Dose in ihren Seitenwandungen mit einem angeformten membran-verschlossenen Durchstecknippel als Kabelausführung bekannt, wobei der Durchstecknippel samt Membran aus thermoplastischem Kunststoff besteht und an die Randkanten entsprechend geformte Wandungsausnehmungen der Dose angeformt sind. Soll bei dieser bekannten Kabeldose ein Kabel eingeführt werden, so wird dies direkt in die Membrane eingestochen und in den Innenraum der Kabeldose geführt. Die Membrane legt sich dabei mit einer gewissen Dichtigkeit an den Mantel des Kabels an, so daß für Fälle, in denen keine besonderes hohen Anforderungen an die Dichtigkeit gestellt werden, eine praktisch brauchbare Lösung zur Verfügung steht.

In der Praxis hat es sich gezeigt, daß im Hinblick auf die Dichtigkeit der Kabeleinführung recht unterschiedliche Ansprüche gestellt werden. Dies hat dazu geführt, daß der Monteur zwei Arten von Kabeldosen mit sich führt und dadurch in der Lage ist, die entsprechende Kabeldose auszuwählen und zu montieren.

Der Erfindung liegt die Aufgabe zugrunde, ausgehend von einer Kabeldose der eingangs genannten Art, bessere Anpassungsmöglichkeiten an die Anforderungen der Praxis zu erfüllen, wobei gleichzeitig auch die Lager- und Vorratshaltung wirtschaftlich gestaltet werden soll.

Erreicht wird dies durch eine Kabeldose der eingangs genannten Art, die dadurch charakterisiert ist, daß mindestens eine der Gewindeöffnungen zumindest im Bereich der Ausbrechscheibe mit einer Membrane aus weichem Kunststoffmaterial oder Kautschukmaterial abgeschlossen ist und daß die Ausbrechscheibe als Lochscheibe, vorzugsweise Kreislochscheibe, ausgebildet ist.

Die Kabeldose gemäß der Erfindung besteht einstückig aus zwei Materialien, die mit Hilfe eines bekannten Spritzverfahrens gleichzeitig oder nacheinander verarbeitet werden. Die Dose besteht im wesentlichen aus Hartkunststoff, an denjenigen Teilen jedoch, wo Elastizität und Flexibilität verlangt wird, besteht die Dose aus einer nachgiebigen Membrane. Soll für geringere Anforderungen an die Dichtigkeit ein Kabel direkt eingeführt werden, so wird die Membrane in der bekannten Art und Weise durchstochen und das Kabel hindurchgeführt. Dies ist deshalb möglich, weil die vorgesehene Abbrechscheibe als Lochscheibe ausgebildet ist, so daß die Durchführung des Kabels möglich ist. Der Innendurchmesser des Loches bzw. dessen Abmessungen sind dabei so gewählt worden, daß eine hinreichend gute Anpassung an den größtmöglichen Außenmanteldurchmesser des verwendeten Kabels möglich ist.

Soll hingegen eine Kabelverschraubung eingesetzt werden, so wird diese mit Hilfe des Gewindes in die Gewindeöffnung eingeschraubt. Der Gewindestutzen der Kabelverschraubung drückt dabei die Lochscheibe in den Innenraum der Dose, so daß die Lochscheibe im Bereich der ringförmigen Sollbruchstelle abbricht. Auf diese Art und Weise wird der Innenraum für die Einführung des Kabels freigegeben.

Bei einer praktischen Ausführungsform der Erfindung können alle Gewindeöffnungen in der vorbeschriebenen Art und Weise ausgestaltet sein. Es ist jedoch auch möglich, daß nur eine dieser Öffnungen oder jede zweite dieser Öffnungen in der geschilderten Ausführungsform ausgestaltet ist, und der verbleibende Teil der Öffnungen ohne Gewinde, jedoch mit der entsprechenden Membrane ausgestattet ist.

Bei einer weiterhin bevorzugten Ausführungsform einer Kabeldose gemäß der Erfindung ist der Bereich der Membrane so ausgestaltet, daß diese sich an den Seitenwandungen nach oben bis in den Bereich des Randes der Dose erstreckt, so daß die Membrane gleichzeitig als Dichtung für den aufzusetzenden Deckel dienen kann. Auf diese Art und Weise wird eine sehr rentable Fertigung realisiert, wobei zusätzlich auch der Gefahr begegnet wird, daß eine separat vorhandene Dichtung sich vom Deckel bzw. der Dose löst und beim Schließen des Deckels nicht mehr zur Verfügung steht.

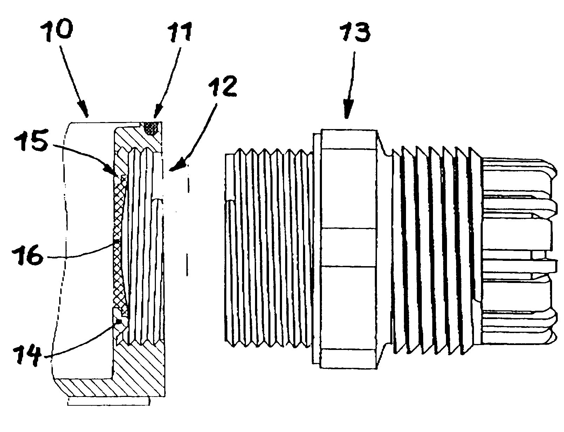

Die Erfindung wird nachstehend anhand der Zeichnung beispielsweise erläutert:

Die einzige Figur der Zeichnung zeigt eine Teilschnittansicht durch eine Kabeldose gemäß der Erfindung mit einer Kabelverschraubung.

In der Figur ist mit 10 eine Kabeldose gezeigt, von der lediglich ein Teilbereich einer Gewindeöffnung 12 in der Figur zu erkennen ist. Die Gewindeöffnung 12 kann mit einer Kabelverschraubung 13 in der bekannten Ausführungsform zusammenwirken.

Im Bereich des inneren Endes der Gewindeöffnung 12 ist über eine ringförmige Sollbruchstelle 15 eine Lochscheibe 14 befestigt, welche erfindungsgemäß als Ringlochscheibe oder Kreislochscheibe ausgebildet ist.

Der Raum der Öffnung der Lochscheibe 14 ist mit einer Membrane 16 ausgestaltet, welche sich im Innenraum der Dose in den Bereich der Sollbruchstelle 15 hineinerstreckt.Die Membrane 16 kann von außen nach innen hin eine abnehmende Wanddicke haben. Derartige Werkstücke können im Spritzverfahren hergestellt werden, wobei zwei geeignete Materialien gleichzeitig oder nacheinander verspritzt werden und an ihren Berührungsstellen eine innige Verbindung eingehen.

Aus der Figur ist ersichtlich, daß durch Eindrehen des Gewindes der Kabelverschraubung 13 die Sollbruchstelle 15 zerstört wird, so daß die Kreislochscheibe 14 und die Membrane entfernt werden können, wobei die Membrane gegebenenfalls auch noch als verbleibener Dichtteil verbleibt und eine Funktion ausübt.

## Patentansprüche

1. Kabeldose (10) mit Deckel und Dichtung, im wesentlichen bestehend aus einer quaderförmigen Dose aus Hartkunststoff, einem auf diese aufsetzbaren und an dieser befestigbaren Deckel und einer zwischen Deckel und Mündungsrand der Dose angeordneten Dichtung, wobei die Dose in ihren Seitenwandungen mit einer Mehrzahl von Gewindeöffnungen (12) zur Aufnahme von Kabelverschraubungen (13) ausgebildet ist, die zum Doseninneren hin jeweils mit einer über eine ringförmige Sollbruchstelle (15) verbundenen Ausbrechscheibe (14) abgeschlossen ist, dadurch gekennzeichnet, daß mindestens eine der Gewindeöffnungen (12) zumindest im Bereich der Ausbrechscheibe (14) mit einer Membrane (16) aus weichem Kunststoffmaterial oder Kautschukmaterial abgeschlossen ist und daß die Ausbrechscheibe (14) als Lochscheibe, vorzugsweise Kreislochscheibe, ausgebildet ist.

## Claims

1. A cable housing (10) with cap and sealing, consisting essentially of a cuboid-shaped housing of hard plastic, a cap mountable on and attachable to the latter, and a sealing arranged between cap and aperture rim of the housing, the housing being designed in its side walls with a plurality of threaded openings (12) for accomodation of cable screwings (13), each being terminated towards the inside of the housing by a break-off disk (14) connected over a ring-shaped breaking point (15), characterized in that at least one of the threaded openings (12) is terminated by a diaphragm (16) of soft plastic or caoutchouc at least in the area of the break-off disk (14), and that the break-off disk (14) is designed as a perforated disk, preferably a circularly perforated disk.

## Revendications

1. Boîte de jonction de câbles (10) comportant un couvercle et un joint, constituée essentiellement d'une boîte parallèlépipédique en matière plastique rigide, d'un couvercle pouvant être placé sur elle et lui être fixé, et d'un joint disposé entre le couvercle et le bord de l'ouverture de la boîte, la boîte présentant, sur ses parois latérales, une pluralité d'ouvertures filetées (12) destinées à recevoir des passe-câbles à vis (13), qui sont respectivement obturés, par rapport à l'intérieur de la boîte, au moyen d'un disque de rupture (14) relié par l'intermédiaire d'une zone annulaire de rupture programmée (15), caractérisé en ce qu'au moins l'une des ouvertures filetées (12), au moins dans la zone du disque de rupture (14), est obturée par une membrane (16) en matière plastique molle ou en matériau de caoutchouc, et en ce que le disque de rupture (14) est réalisé sous la forme d'un disque, de préférence circulaire, muni d'un trou.
